# EUROPEAN PATENT SPECIFICATION

(11) **EP 0 453 134 B1**
(45) Date of publication and mention of the grant of the patent: **30.11.1994**
(21) Application number: 91302993.0
(22) Date of filing: 04.04.1991
(51) Int. Cl.: B63B 21/22, F16G 15/04

(54) **Anchor-line laying device and operating method**
Vorrichtung zum Verlegen von Ankerlinien und Verwendungsmethode
Dispositif pour la pose de lignes d'ancre et méthode d'utilisation

(30) Priority: 18.04.1990 BR 9001801
(43) Date of publication of application: 23.10.1991
(73) Proprietor: PETROLEO BRASILEIRO S.A. - PETROBRAS, Rio de Janeiro (BR)
(72) Inventor: Fujita, Tokume, Rio de Janeiro, (RJ) (BR)
(74) Representative: Barlow, Roy James

(56) References cited:
- FR-A- 2 607 606
- GB-A- 14 653
- GB-A- 870 530
- US-A- 2 858 161

## Description

This invention concerns a line-laying device used in a platform mooring system, and also its operating method. The device is useful in lowering the chain part of a line into the sea, down to the sag level of the line since, owing to the great weight involved, failure to use it might lead to damage to not only the platform but also the line itself, while use of the device can prevent any slipping or drop of the line after each platform chain has been fastened to the previously laid line.

US-A-3967572 discloses a platform mooring system which needs a line-laying device because, as the platform approaches the vessel which holds the line that has been laid beforehand, an end of the chain (from the platform) is transferred to the vessel. By means of an auxiliary winch the vessel locates the transferred chain and holds it down on the deck of the vessel, and then fastens it to the chain of such previously laid line. After being fastened, the line must be lowered into the sea down to its sag level, without slipping or falling. US-A-3967572 also discloses a chain stopper for clamping one link of a chain.

Our EP-A2-0438258 discloses an improved chain laying device which consists of a support, and a sheave with a crown and fixed to such support by a spindle, there being slots in the flanges at the side of the crown which act as guides for breakable ropes, which are fixed in the following way: at one end, to a central common lug kept off by a guide mounted on the spindle, and at the other end, to individual turn-buckles which enable the links of a chain to be fastened to the crown at different angles. Thus, as the line is lowered down to its sag level, the chain around the crown tends to reduce its wrap angle and initially this pushes away from the crown the links on the topmost side of the sag. Thus, when the last breakable rope breaks the line will be practically at its sag level and any sliding or slipping of the laying device will not harm the platform or the winch in any way.

However, in spite of the fact that the improved laying device referred to above is extremely efficient, there is a need for a laying device which is less rugged but more in keeping with the kind of handling available on conventional craft dealing with anchors.

Accordingly, the device of this invention is defined in claim 1.

The method of the present invention is defined in claim 2.

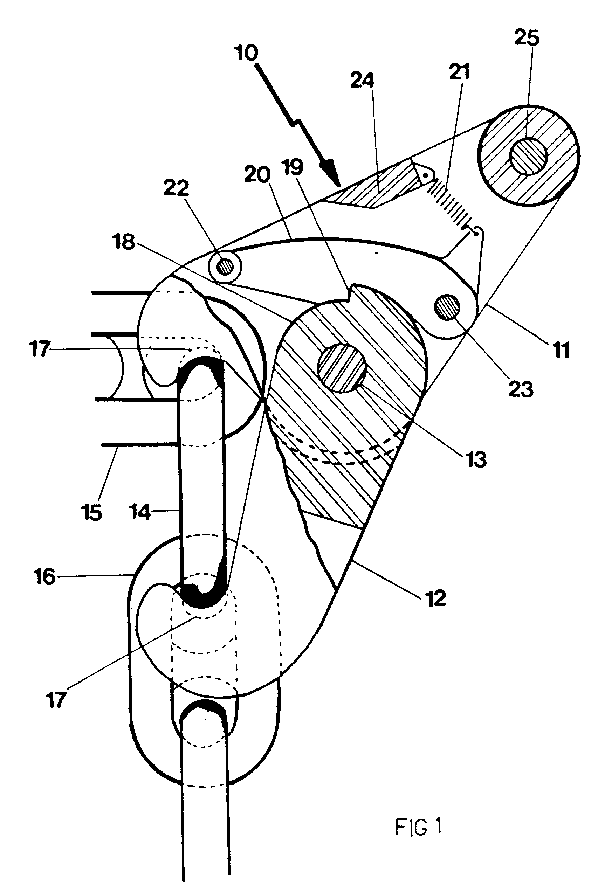

In order that the present invention may more readily be understood the following description is given, merely by way of example, with reference to the accompanying drawings, in which:-
FIGURE 1 is a front, partly sectioned, view of the line-laying device of this invention; and
FIGURE 2 is a side perspective view of the line-laying device shown in Figure 1.

The invention consists of a line-laying device 10 made up of two claw members, 11, 12 each having twin hooks, and pivoting relative to one another on a spindle 13. The claw member 12 is solid at part 18 where it swivels on the spindle 13 and it has a shoulder 19 against which a latch 20 is biased by a spring 21. This latch 20 is mounted on the claw 11 by means of spindle 23 and is fitted with a small wheel 22 at its end. The claw 11 is also fitted with a stop 24 to limit travel of the latch 20, and with a ring 25 to which an associated cable is fastened.

The line-laying device employed for the mooring of platforms has the twin hooks of its two claws 11 and 12 able to grip the outside of link 14 by its ends. The claws 11 and 12 are such that the forward link 15 and the next link 16 following upon the gripped link 14 of the chain lie in between the spaced hooks and are free to turn about the end parts 17 of the link 14.

This method of operating the line-laying device 10 is as follows:-
firstly, for operating the line-laying device, fasten a cable to a winch on the line-laying vessel, by means of the ring 25, and put the line-laying device 10 on to a chain link 14, between a part locked on deck and a free end of the chain;
latch 20, biased by the spring 21 automatically fits against shoulder 19 when the claws 11 and 12 close on the link 14, and holds the claws 11, 12 engaged on the link 14;
after thus fastening the mooring line and the laying device 10, the mooring line is pulled to release the deck locks and allow the lowering operation to begin, controlling the lowering rate by the pull on the supporting cable attached to ring 25, and go on down to the sag level of the chain;
during lowering, the claws 11, 12 will close around the link 14, due to the weight of the chain acting upon claw 12 and the pull exerted by the supporting cable through the ring 25;
when the chain ceases to fall vertically after having first of all hung from the laying device 10, the laying device 10 unlocks, as a result of the cable now adjusting itself to the sag of the chain so that the forward link 15 turns about upper end part 17 of the gripped link 14 until it contacts and lifts the small wheel 22 of the latch 20;
the latch 20 lifts as the link 15 continues to turn, and releases itself from the shoulder 19 until it gets to shoulder 24 whereupon unlatching is complete; and
the claw 11, which had been pulled upwardly by the link 15, lifts and the chain is released after its sag level has been reached, because of transfer of the weight of the travelling chain run between the platform and the link 15, to the platform, thereby relieving the ring 25 from its supporting task.

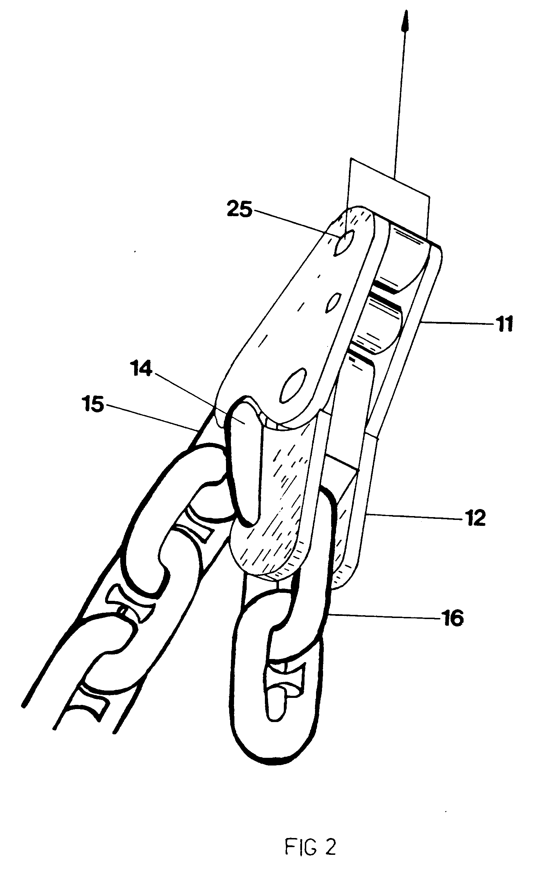

As can be seen from Figure 2, the link 15 lies in the run of the chain coming from the platform, and the link 16 lies in the run to the end at which the previously laid line is fastened. The chain from the platform is held on the deck of the line-laying craft, and a certain number of links (at the tail end) are left free, behind the place where the chain is held down, for the purpose of fastening to the previously laid line.

During the lowering, the weight acting upon the claw 12 and the pull exerted by the holding cable through the ring 25, create forces that tend to close the claws 11 and 12 about the link 14, thereby reducing the force acting upon latch 20, which happens all the more as the weight supported by the device 10, acting on claw 11, is gradually transferred to the platform as the link sinks lower. Unlocking occurs when the chain, which was originally hanging from device 10 along with the cable, starts to shift away from its vertical position in following the sag of the chain, and the link 15 turns the link 14 as described above.

As lowering proceeds from this point, the link 15 begins to press against the stop 24 and tends to lift up (open) the claw 11 resisted by the weight that acts upon the claw 12 and the holding force exerted by the device 10, at ring 25. Upon getting down to the sag level, the weight of the chain acting upon link 16 is transferred to the platform, thus relieving the holding force at ring 25 and therefore enabling claw 11 which had been pulled by link 15 to lift and release the chain.

## Claims

1. A chain-stopper device (10) for laying platform mooring systems, consisting of means for clamping a chain link, characterised in that said clamping means comprise two claws (11, 12) each having two hooks and relatively pivotable about a spindle (13), one said claw being solid at the part (18) where it swivels on said spindle and being fitted with a shoulder (19) engaged by a latch (20) biased by a spring (21) said latch (20) being provided with a small wheel (22) at its end and being mounted on one said claw (11) by means of spindle (23), and wherein the other said claw is also fitted with a stop (24) to limit the travel of said latch and with a ring (25) to which the cable to be dealt with can be fastened; wherein said claws (11, 12) are so arranged that they grip the outside of a chain link (14) by its ends, and that the forward link (15) and next the successive link (16) to said clamped link (14) of the chain lie within the claws (11 and 12) and are free to turn about parts (17) at the ends of said clamped link.

2. A method of laying a line using a chain-stopper device according to claim 1, including the steps of securing a link (14) of a chain to the chain stopper device (10); paying out a winch cable from a craft; and fastening said winch cable to the chain; characterised by the steps of fastening the winch cable to the chain by fastening the winch cable to the chain-stopper device (10) by means of said ring (25) of the chain-stopper device (10), the link (14) of said chain being between locks on the deck of the craft and the free end of the chain; automatically fitting said spring biased latch on said abutment shoulder (19), so that the claws close upon the link; after fastening, pulling the mooring line with the aid of said laying device, thus enabling the deck locks to be released and allowing the lowering operation down to the sag level of the line to begin; closing the claws (11, 12) of the laying device about the chain link during lowering, due to forces arising from the weight exerted upon the claw (12) and the pull exerted by the winch cable at the ring (25); unlocking the laying device as the chain shifts away from the vertical position, after having initially hung from the laying device together with the winch cable, to follow the sag of the chain, while the forward link (15) turns about the upper end part (17) of the clamped link (14), until it contacts the small wheel (22) of the latch; raising the latch by the action of the forward link (15) continuing to turn, and releasing from said shoulder (19) and eventually engaging said stop (24), so completing the unlocking; and after having arrived at the sag level, lifting the claw (11) which had been pressed upon by the clamped link (14), to free the chain because of the transfer of the weight of the chain bearing upon link (14) to the platform, thereby relieving the holding force of the ring (25).

## Patentansprüche

1. Kettenstoppervorrichtung (10) zum Legen von Plattform-Vertäuungs- bzw. Verankerungssystemen, bestehend aus einer Einrichtung zum Festklemmen eines Kettengliedes,
**dadurch gekennzeichnet,** daß die Festklemmeinrichtung zwei Klauen (11,12) aufweist, deren jede zwei Haken hat und relativ um eine Achse oder Spindel (13) verschwenkbar ist, wobei eine der Klauen an dem Teil (18), wo sie sich an der Achse oder Spindel verschwenkt, massiv und mit einer Schulter (19) versehen ist, mit welcher eine Klinke (20) in Eingriff tritt, die von einer Feder (21) vorgespannt ist, die Klinke (20) mit einem kleinen Rad (22) an ihrem Ende versehen und an der einen Klaue (11) mittels der Achse oder Spindel (23) angebracht ist, und wobei die andere der Klauen auch mit einem Anschlag (24), um die Bewegung der Klinke zu begrenzen, und mit einem Ring (25) versehen ist, an welchem das zu handhabende Kabel befestigt werden kann; wobei die Klauen (11,12) so angeordnet und ausgeführt sind, daß sie mit ihren Enden die Außenseite eines Kettengliedes (14) erfassen, und, daß das dem festgeklemmten Glied (14) vorhergehende Glied (15) und das dem festgeklemmten Glied (14) nächstfolgende Glied (16) der Kette in den Klauen (11 und 12) liegen und frei sind, sich um Abschnitte (17) an den Enden des festgeklemmten Gliedes zu drehen.

2. Verfahren zum Legen einer Leine unter Verwendung einer Kettenstoppervorrichtung nach Anspruch 1, umfassend die Schritte des Festlegens eines Gliedes (14) einer Kette an der Kettenstoppervorrichtung (10); des Ausziehens oder Ausgebens eines Windenkabels von einem Fahrzeug; und des Befestigens des Windenkabels an der Kette; gekennzeichnet durch die Schritte des Befestigens des Windenkabels an der Kette durch Befestigen des Windenkabels an der Kettenstoppervorrichtung (10) mittels des Ringes (25) der Kettenstoppervorrichtung (10), wobei das Glied (14) der Kette sich zwischen Sicherungen oder Verriegelungen an dem Deck des Fahrzeugs und dem freien Ende der Kette befindet; des automatischen Anpassens oder Anlegens der federbelasteten Klinke an die Widerlagerschulter (19) derart, daß die Klauen sich an dem Glied schließen; des Ziehens der Vertäuungs- bzw. Verankerungsleine nach dem Befestigen mit der Hilfe der Legevorrichtung derart, daß die Decksicherungen oder Deckverriegelungen freigegeben werden können und der Absenkvorgang auf die Durchhängehöhe der Leine begonnen werden kann; des Schließens der Klauen (11,12) der Legevorrichtung um das Kettenglied während des Absenkens als Folge von Kräften, die sich aus dem auf die Klaue (12) ausgeübten Gewicht und der Zugkraft ergeben, die von dem Windenkabel an dem Ring (25) ausgeübt wird; des Entriegelns der Legevorrichtung, wenn die Kette sich aus der vertikalen Position heraus verschiebt, nachdem sie anfänglich von der Legevorrichtung zusammen mit dem Windenkabel gehangen hat, um der Durchhängung der Kette zu folgen, während das vorhergehende Glied (15) sich um den oberen Endabschnitt (17) des festgeklemmten Gliedes (14) dreht, bis es das kleine Rad (22) der Klinke berührt; des Hebens der Klinke durch die Wirkung des vorhergehenden Gliedes (15), welches fortfährt, sich zu drehen, und des Freigebens von der Schulter (19) und eventuellen Ineingrifftretens mit dem Anschlag (24), um auf diese Weise das Entriegeln zu vervollständigen; und des Hebens der Klaue (11), auf welche das festgeklemmte Glied (14) gedrückt hat, nach dem Erreichen der Durchhängung bzw. des Durchhängewertes, um die Kette zu befreien als Folge der Übertragung des Gewichtes der an dem Glied (14) getragenen Kette auf die Plattform, um dadurch die Haltekraft des Ringes (25) freizugeben bzw. aufzuheben.

## Revendications

1. Dispositif de griffes à chaîne (10) pour poser une plateforme de systèmes d'amarrage, constitué de moyens pour pincer un maillon d'une chaîne, caractérisé en ce que ce dispositif de pinçage comporte deux griffes (11, 12) ayant chacune deux crochets et qui peuvent pivoter l'une par rapport à l'autre autour d'un axe (13), l'une de ces griffes étant lisse sur une partie (18) où elle pivote sur l'axe et étant pourvue d'un épaulement (19) coopérant avec un loquet (20) sollicité élastiquement par un ressort (21), ce loquet (20) étant muni d'une petite roue à son extrémité et étant monté sur ladite griffe (11) au moyen d'un axe (23), et en ce que l'autre griffe est également équipée d'une butée (24) pour limiter le déplacement du loquet et d'une bague (25) à laquelle le câble associé peut être attaché, et en ce que lesdites griffes (11, 12) sont disposées de manière qu'elles serrent l'extérieur d'un maillon (14) de chaîne par ses extrémités, et que le maillon avant (15) et le maillon (16) consécutif audit maillon serré (14) de la chaîne se trouvent à l'intérieur des griffes (11 et 12) et soient libres de tourner autour des parties (17) aux extrémités du maillon pincé.

2. Procédé pour poser une ligne utilisant un dispositif de griffes à chaîne selon la revendication 1, comprenant les étapes suivantes : fixation d'un maillon (14) d'une chaîne au dispositif de griffes à chaîne (10); déroulement d'un câble de treuil à partir d'une embarcation ; fixation dudit câble à la chaîne ; caractérisé par les étapes suivantes : fixation du câble de treuil à la chaîne par fixation dudit câble au dispositif de griffes à chaîne (10) au moyen de la bague (25) du dispositif de griffes à chaîne (10), le maillon (14) de ladite chaîne étant situé entre des éléments de verrouillage sur le pont de l'embarcation et l'extrémité libre de la chaîne; prise automatique du loquet sollicité élastiquement sur ledit épaulement de butée (19, de telle sorte que les griffes se referment sur le maillon ; après fixation, traction de la ligne d'amarrage à l'aide dudit dispositif de pose, permettant ainsi aux éléments de verrouillage du pont d'être libérés et autorisant à commencer l'opération d'abaissement jusqu'au niveau de déflexion de la ligne ; fermer les griffes (11, 12) du dispositif de pose sur le maillon de chaîne durant la descente, en raison de forces résultant du poids exercé sur la griffe (12) et de l'attraction exercée par le câble de treuil sur la bague (25) ; déverrouillage du dispositif de pose lorsque la chaîne s'écarte de la position verticale, après avoir initialement décroché le dispositif de pose ainsi que le câble de treuil pour suivre la déflexion de la chaîne, tandis que le maillon avant (15) tourne autour de la partie terminale supérieure (17) du maillon serré (14), jusqu'à ce qu'il contacte la petite roue (22) du loquet ; élévation du loquet par l'action du maillon avant (15) continuant à tourner, et libération de l'épaulement (19) et éventuellement engagement de la butée (24), afin de compléter le déverrouillage ; et après être arrivé au niveau de déflexion, élévation de la griffe (11) qui a été pressée par le maillon serré (14), pour libérer la chaîne en raison du transfert de poids de la chaîne portant sur le maillon (14) à la plateforme, ce qui libère la force de maintien de la bague (25).
